# EUROPEAN PATENT SPECIFICATION

(11) **EP 1 234 473 B1**
(45) Date of publication and mention of the grant of the patent: **25.07.2007**
(21) Application number: 00983637.0
(22) Date of filing: 05.12.2000
(51) Int. Cl.: H04Q 7/38, H04Q 7/34, H04M 3/00

(54) **METHOD AND APPARATUS IN A MOBILE COMMUNICATIONS NETWORK**
VERFAHREN UND VORRICHTUNG IN EINEM MOBILEN KOMMUNIKATIONSNETZ
PROCEDE ET DISPOSITIF POUR RESEAU DE COMMUNICATIONS MOBILES

(30) Priority: 10.12.1999 SE 9904524
(43) Date of publication of application: 28.08.2002
(73) Proprietor: TELEFONAKTIEBOLAGET LM ERICSSON (publ), 164 83 Stockholm (SE)
(72) Inventor: LINDOFF, Mats, S-222 21 Lund (SE); WINGREN, Tord, S-212 32 Malmö (SE)
(74) Representative: Herbjörnsen, Rut
(86) International application number: PCT/SE2000/002432
(87) International publication number: WO 2001/043483

(56) References cited:
- EP-A1- 0 880 296
- EP-A1- 0 891 110
- EP-A1- 1 035 746
- EP-A1- 1 035 747
- EP-A1- 1 039 771
- EP-A2- 0 830 046
- WO-A1-97/49255
- WO-A2-98/34421
- GB-A- 2 317 304
- SE-L- 9 802 003

## Description

### Technical Field

The present invention relates to mobile telephones an in particular to a method and an apparatus for preventing use of mobile telephones in situations where it is undesirable.

### Description of Related Art

Mobile telephones and other terminals utilizing wireless communication, such as personal computers, are being used to an increasing extent. In some cases this is very annoying to other people, for example, telephones ringing during concerts or at cinemas. Some times the owner of the phone even answers and engages in a conversation without leaving the room.

In hospitals, for example, radio signals transmitted by mobile telephones sometimes interfere with technical equipment In airplanes all use of equipment containing radio transmitters is prohibited because they may interfere with the control electronics. Even in these situations, people sometimes ignore the ban on this type of equipment, or just forget to turn their mobile telephones off when entering an air plane or hospital area, or a concert hall or the like.

Patent specifications WO 96/29687 and US 5 543 779 both describe methods for detecting any mobile telephones nearby that are engaged in communication with a base station. With this method, only a few of the mobile telephones present will be detected, and they will be so at a stage when the mobile telephone is already transmitting signals to the base station. This means that sensitive equipment may already be disturbed and it is probably too late to stop the telephone from ringing.

EP-A1-0 880 296 discloses a method for switching off mobile phones in a small area by means of short-range signals sent by a so called "transmission interruption releaser". A magnetic field is used to order all mobile telephones in the area to block radio communication.

### Object of the invention

It is an object of the invention to enable the detection and/or prevention of the use of radio communication equipment in situations or places in which such use is undesirable.

### Summary of the Invention

This object is achieved according to the invention by a first radio communication device comprising:
transmitting means for transmitting a radio signal instructing portable radio communication devices within a certain range from the unit to identify themselves; receiving means for receiving and interpreting the response signals; and
means for, in dependence of the response signal received from each radio communication device:
   transmitting a message to the radio communication device,
   transmitting a message to the user of the radio communication device, or
   ordering the radio communication device to turn itself off,
wherein the transmitting means and the receiving means are short range wireless communication means.

The object is also achieved by a portable radio communication device comprising means for communicating in a cellular telephone network and short-range wireless communication means, characterized in that it comprises identifying means for
- in response to a low power radio message instructing it to identify itself, transmitting a response signal;
- receiving a message and/or instructions and act upon them,
said identifying means being a short-range wireless communication means for receiving said low power radio message,
said portable radio communication device being adapted to shut itself down when instructions to do so are received.

The object is also achieved according to the invention by a method of controlling the use of mobile terminals for use in mobile telecommunications networks, comprising the following steps:
- transmitting a radio signal from a central unit instructing all radio communication units within a certain range to identify themselves,
- transmitting a response signal from each portable radio communication unit within the range;
- transmitting instructions from the central unit to each portable radio communication unit in dependence of the content of the response signal;
- the portable radio communication unit responding to the instructions;
wherein the radio signal, the response signal and the instructions are transmitted using short range wireless communication means and wherein said instructions comprise the order to the portable radio communication unit to turn itself off, or to turn off the cellular communication function.

In this way, portable radio communications device may be switched off automatically by the first radio communication device, or the user of the mobile phone can be reminded that the phone should be turned off.

According to a preferred embodiment the first radio communication device is adapted to transmit an alarm if all mobile terminals do not respond to said message or order within a certain time period.

According to another embodiment the portable radio communication device is adapted to shut itself down when instructions to do so are received.

Instructions may also, instead of a shutdown command, comprise the order to notify the person carrying the portable radio.

It is foreseen that in a few years' time, most mobile telephones will include low power radio transmitters having a range of, typically, 10m or 100m, for example according to the Bluetooth standard. These radio transmitters will be used for a number of purposes:

For signalling to and from a telephone in the PSTN network so that the mobile telephone can be used as a cordless phone in the PSTN network when the user is close enough to his/her home telephone, or to connect a wireless headset to either the mobile phone or to the PSTN network using Bluetooth.

To transmit data between the mobile telephone and other units, for example personal computer, for example, if the user keeps a diary and/or a phone book in the mobile phone and wants the diary and/or phone book in his/her PC to be updated with information from the mobile telephone.

These functions are described, for example, in WO97/34403 and WO 98/11707.

### Brief Description of the Drawings

In the following, the invention will be described in more detail, by way of preferred embodiments and with reference to the drawings, in which:
Figure 1 is an overall schematic representation of the units according to the invention and how they interact;
Figure 2 is a schematic representation of a mobile telephone according to one embodiment of the invention;
Figures 3A and 3B are flow charts of a first and a second embodiment of the method according to the invention.

### Detailed Description of Embodiments

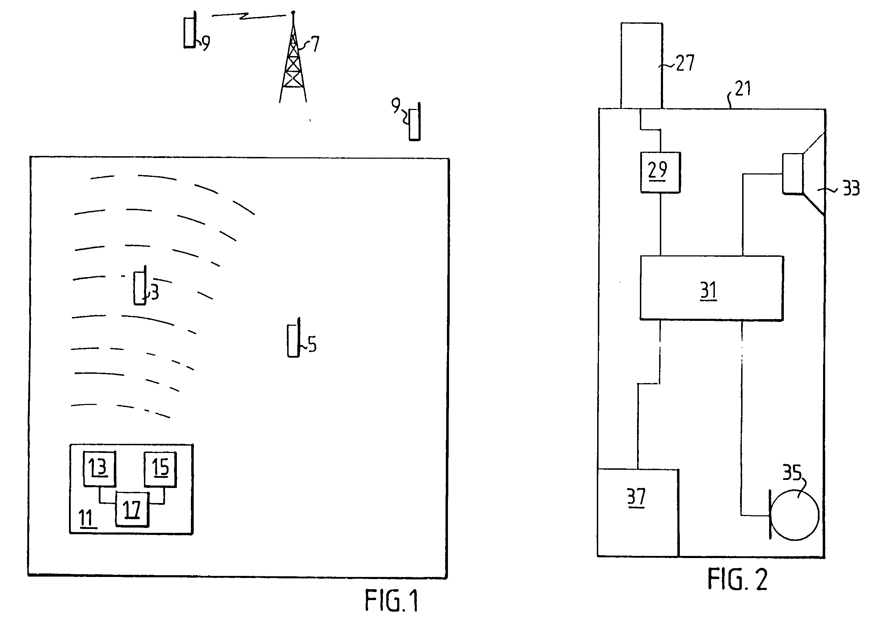

Figure 1 is a schematic representation of the units according to the invention. In this example the method according to the invention is implemented for a building 1, but it may just as well be an airplane, or the gate area at an airport, or any other area.

In the building 1, there are a number of mobile telephones 3, 5 that may be used for mobile communication in mobile telephone networks, represented in the Figure by a base station 7. This type of communication is well known in the art. The mobile telephones 3 may operate according to any standard known in the art, including Time Division Multiple Access (TDMA), Frequency Division Multiple Access (FDMA), Code Division Multiple Access (CDMA), and Wideband CDMA. Accordingly the mobile terminals will not all connect to the same base station. Each mobile terminal will connect to a base station 7 in a network providing the appropriate standard. However, for simplicity, only one base station is shown in this figure, since the communication between the mobile telephones and the telephone networks is not essential to the invention.

In the example, one mobile telephone 3 in the building 1 is currently involved in a connection to the base station 7. Another mobile phone 5 is not involved in a connection, but is turned on. There may be other telephones in the building that are not turned on. These phones will not be affected by the invention, and are not shown. There are, of course, also a number of mobile telephones 9 outside the building.

In the building 1 there is also a central radio unit 11 comprising a transmitter 13 transmitting low power radio signals. The power of the radio signals is adjusted so that the signal will be received by mobile telephones 3, 5 inside the building, but not the mobile telephones 9 outside the building.

The low power radio signal tells the mobile telephones 3, 5 to respond by transmitting a similar signal to identify themselves to the central unit 11, for example, by the type of equipment they are. This signal is received by a receiving part 15 and processed in a processor 17 in the central unit 11. This identification is necessary, or at least desirable, to make sure that only equipment that really has to be turned off is, especially in the cases when an alert is sent out if all radio transmitting equipment is not turned off. For example, there is no need to turn off television sets or radios. The processor 17 also controls the transmitting and receiving parts 13, 15.

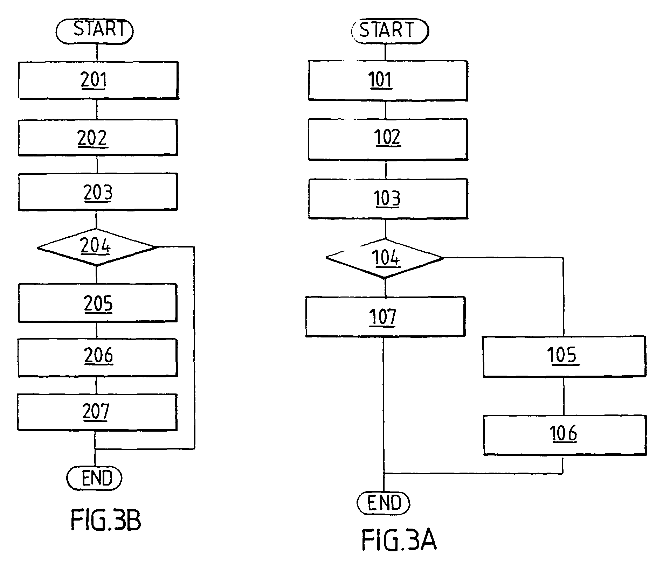

In order for the method according to the invention to work, the mobile telephone must include a low power radio transmitter of the specified kind, and software for handling the functions, as will be described in connection with Figures 2 and 3. For mobile phones not including such units, a piece of additional equipment may be used to enable the mobile phone to communicate with the central radio unit.

Figure 2 shows a general mobile telephone 21 according to the invention. As an example, a GSM telephone is shown.

The telephone shown in Figure 2 comprises an antenna 27 used to receive and transmit signals through the air interface. The signals received by the antenna are processed in a radio unit 29 and a processing unit 31 before they are played to the subscriber through a loudspeaker 33. The actual processing steps performed, such as demodulation, D/A conversion equalization and decoding, depend on the signalling system and are well known to the person skilled in the art. Speech is registered by a microphone 35 and processed by the processing unit 31 and the radio unit 29 before it is transmitted from the antenna 27. As common in the art, the processor may also control a keyset and display (not shown).

According to the invention, the telephone also comprises a short-range radio transmitter unit 37, for example, a Bluetooth transmitter, controlled by the processing unit 31.

As discussed above, the short-range radio transmitter included in the mobile terminal according to the invention may, and probably will, be used for other purposes than that according to the invention.

If the hardware and/or software needed for the method according to the invention is not included in the mobile terminal, a plug-in unit comprising the necessary hardware and software can instead be connected to the mobile telephone.

Figure 3A is a flow chart of the method according to a first embodiment of the invention:

| | |
|---|---|
| Step 101: | The central unit sends out a request signal requesting all mobile telephones and other units transmitting radio signals to identify themselves. |
| Step 102: | Each radio transmitting unit, when receiving the signal from the central unit, identifies itself to the central unit by a response signal. This signal preferably includes the type of unit and the type or types of communication it may engage in. |
| Step 103: | The central unit interprets each of the response signals received, and determines for each communication device that has responded, if this device has to be turned off or not, or to be partially turned off. |
| Step 104: | If the device should be turned off, go to step 105; if an instruction or another message should be sent to the device, go to step 107; if nothing should happen, end of procedure. |
| Step 105: | The central unit orders the device to turn itself off. |
| Step 106: | The device turns itself off. The next time a request signal is sent out from the central unit, this device will not be registered. End of procedure. |
| Step 107: | The central unit sends a message to the communication device. Any type of message that the device can handle may be sent, for example "turn of mobile phones", or "switch to short distance radio for communication". End of procedure. |

Figure 3B is a flow chart of the method according to a second embodiment of the invention:

| | |
|---|---|
| Step 201: | The central unit sends out a request signal requesting all mobile telephones or other units transmitting radio signals to identify themselves. |
| Step 202: | Each unit transmitting radio signals, when receiving the signal from the central unit, identifies itself to the central unit by a response signal. |
| Step 203: | The central unit interprets each of the response signals received, and determines for each communication device that has responded, if this device has to be turned off or not |
| Step 204: | If the device should be turned off, go to step 205; if nothing should happen, end of procedure. |
| Step 205: | The central unit orders the device to turn itself off. If the device offers several communication functions, for example, communication in a cellular network, which may be dangerous, and low power radio communication, only the undesired functions will have to be turned off, for example, the long-distance radio transmitting parts. |
| Step 206: | The device transmits a confirmation signal to the central unit, then turns itself off. |
| Step 207: | If confirmation signals are not received from all devices that should be turned off, within a certain amount of time, a message may be transmitted. This may be a private alert to the owner of the device that was not turned off, or a public alert or alarm. For example, in airplanes or in hospitals, a public alert may be appropriate to draw attention to the fact that electronic equipment may be disturbed. End of procedure. |

## Claims

1. A first radio communication device (11) comprising
transmitting means (13, 17) for transmitting a radio signal instructing portable radio communication devices within a certain range from the unit to identify themselves; receiving means (15, 17) for receiving and interpreting the response signals; and
means (13, 17) for, in dependence of the response signal received from each radio communication device:
transmitting a message to the radio communication device,
transmitting a message to the user of the radio communication device, or
ordering the radio communication device to turn itself off,
wherein the transmitting means (13) and the receiving means (15) are short range wireless communication means.

2. A first radio communication device according to claim 1, adapted to transmit an alarm if all mobile terminals do not respond to said message or order within a certain time period.

3. A first radio communication device according to claim 1 or 2, adapted to order a mobile terminal than does not respond to said message or order within a certain time period to turn off the cellular communication function.

4. A first radio communication device according to claim 1, 2 or 3, adapted to order a mobile terminal that does not respond to said message or order within a certain time period to switch to a short range communication mode.

5. A portable radio communication device (21) comprising means for communicating in a cellular telephone network and short-range wireless communication means, **characterized in that** it comprises identifying means (37) for
- in response to a low power radio message instructing it to identify itself, transmitting a response signal;
- receiving a message and/or instructions and act upon them, said identifying means (37) being a short-range wireless communication means for receiving said low power radio message,
said portable radio communication device (21) being adapted to shut itself down when instructions to do so are received.

6. A portable radio communication device according to claim 5 or 6, adapted to switch to a short-range communication mode when instructions to do so are received.

7. A portable radio communication device according to claim 5 or 6, wherein said identifying means (37) is a short-range wireless communication means according to the Bluetooth standard, for receiving said low power radio message.

8. A method of controlling the use of mobile terminals for use in mobile telecommunications networks, comprising the following steps:
- transmitting a radio signal from a central unit (11) instructing all radio communication units within a certain range to identify themselves,
- transmitting a response signal from each portable radio communication unit (21) within the range;
- transmitting instructions from the central unit to each portable radio communication unit in dependence of the content of the response signal;
- the portable radio communication unit responding to the instructions;
wherein the radio signal, the response signal and the instructions are transmitted using short range wireless communication means and wherein said instructions comprise the order to the portable radio communication unit to turn itself off, or to turn off the cellular communication function.

9. A method according to claim 8, wherein said instructions comprise the order to notify the person carrying the portable radio.

## Patentansprüche

1. Erste Funkkommunikationsvorrichtung (11), umfassend:
eine Übertragungseinrichtung (13, 17) zum Übertragen eines Funksignals, das tragbare Funkkommunikationsvorrichtungen innerhalb eines gewissen Bereiches von der Einheit anweist, sich zu identifizieren;
eine Empfangseinrichtung (15, 17) zum Empfangen und Interpretieren der Antwortsignale; und
eine Einrichtung (13, 17) zum, in Abhängigkeit des von jeder Funkkommunikationsvorrichtung empfangenen Antwortsignals:
- Übertragen einer Nachricht an die Funkkommunikationsvorrichtung,
- Übertragen einer Nachricht an den Benutzer der Funkkommunikationsvorrichtung, oder Beauftragen der Funkkommunikationsvorrichtung, sich selbst auszuschalten,
wobei die Übertragungseinrichtung (13) und die Empfangseinrichtung (15) Kurzbereichs-Drahtloskommunikationseinrichtungen sind.

2. Erste Funkkommunikationsvorrichtung gemäß Anspruch 1, ausgebildet zum Übertragen eines Alarms, wenn sämtliche Mobilendgeräte nicht auf die Nachricht oder den Auftrag innerhalb einer gewissen Zeitperiode ansprechen.

3. Erste Funkkommunikationsvorrichtung gemäß Anspruch 1 oder 2, ausgebildet zum Beauftragen eines Mobilendgerätes, das nicht auf die Nachricht oder den Auftrag innerhalb einer gewissen Zeitperiode anspricht, die Zellularkommunikationsfunktion auszuschalten.

4. Erste Funkkommunikationsvorrichtung gemäß Anspruch 1, 2 oder 3, ausgebildet zum Beauftragen eines Mobilendgerätes, das nicht auf die Nachricht oder den Auftrag innerhalb einer gewissen Zeitperiode anspricht, zu einem Kurzbexeichs-Kommunikationsrnodus umzuschalten.

5. Tragbare Funkkommunikationsvorrichtung (21), mit einer Einrichtung zum Kommunizieren in einem Zellulartelefonnetzwerk und einer Kurzbereichs-Drahtloskommunikationseinrichtung,
**dadurch gekennzeichnet, dass** sie eine Identifizierungseinrichtung (37) umfasst zum:
- Übertragen eines Antwortsignals in Ansprechen auf eine Funknachricht einer niedrigen Leistung, die sie anweist, sich zu identifizieren;
- Empfangen einer Nachricht und/oder von Anweisungen und nach ihnen Handeln,
wobei die Identifizierungsenrichtung (37) eine Kurzbereichs-Drahtloskommunikationseinrichtung zum Empfangen der Funknachricht einer niedrigen Leistung ist,
wobei die tragbare Funkkommunikationsvorrichtung (21) ausgebildet ist, sich selbst herunterzufahren, wenn Anweisungen, dieses zu tun, empfangen werden.

6. Tragbare Funkkommunikationsvorrichtung gemäß Anspruch 5 oder 6, ausgebildet zum Umschalten zu einem Kurzbereichs-Kommunikationsmodus, wenn Anweisungen, dieses zu tun, empfangen werden.

7. Tragbare Funkkommunikationsvorrichtung gemäß Anspruch 5 oder 6, wobei die Identifizierungseinrichtung (37) eine Kurzbereichs-Drahtloskommunikationseinrichtung gemäß dem Bluetooth-Standard zum Empfangen der Funknachricht einer niedrigen Leistung ist.

8. Verfahren zum Steuern der Verwendung von Mobilendgeräten zur Verwendung in Mobiltelekommunikationsnetzwerken, die Schritte umfassend zum:
- Übertragen eines Funksignals von einer Zentraleinheit (11), die sämtliche Funkkommunikationseinheiten innerhalb eines gewissen Bereichs anweist, sich zu identifizieren,
- Übertragen eines Antwortsignals von jeder tragbaren Funkkommunikationseinheit (21) innerhalb der Reichweite;
- Übertragen von Anweisungen von der Zentraleinheit an jede Funkkommunikationseinheit in Abhängigkeit des Inhalts des Antwortsignals;
- Ansprechen der tragbaren Funkkommunikationseinheit auf die Anweisungen;
wobei das Funksignal, das Antwortsignal und die Anweisungen mit Verwenden der Kurzbereichs-Drahtloskommunikationseinrichtung übertragen werden, und
wobei die Anweisungen den Auftrag an die tragbare Funkkommunikationseinheit umfassen, sich selbst auszuschalten, oder die Zellularkommunikationsfunktion auszuschalten.

9. Verfahren gemäß Anspruch 8, wobei die Anweisungen den Auftrag zum Benachrichtigen der die tragbare Funkeinheit tragenden Person umfassen.

## Revendications

1. Premier dispositif de radiocommunication (11) comprenant
un moyen d'émission (13, 17) pour émettre un signal radio demandant à des dispositifs de radiocommunication portables dans un certain rayon à partir de l'unité de s'identifier ;
un moyen de réception (15, 17) pour recevoir et interpréter les signaux de réponse ; et
un moyen (13, 17) fonctionnant sous la dépendance du signal de réponse reçu à partir de chaque dispositif de radiocommunication, pour :
émettre un message vers le dispositif de radiocommunication,
émettre un message vers l'utilisateur du dispositif de radiocommunication, ou
ordonner au dispositif de radiocommunication de se mettre hors fonction,
dans lequel le moyen d'émission (13) et le moyen de réception (15) sont des moyens de communication sans fil à courte distance.

2. Premier dispositif de radiocommunication selon la revendication 1, adapté pour émettre une alarme si tous les terminaux mobiles ne répondent pas au message ou à l'ordre au cours d'une certaine durée.

3. Premier dispositif de radiocommunication selon la revendication 1 ou 2, adapté pour ordonner à un terminal mobile qui ne répond pas au message ou à l'ordre au cours d'une certaine durée, de désactiver la fonction de communication cellulaire.

4. Premier dispositif de radiocommunication selon la revendication 1, 2 ou 3, adapté pour ordonner à un terminal mobile qui ne répond pas au message ou à l'ordre au cours d'une certaine durée de commuter vers un mode de communication à courte distance.

5. Dispositif de radiocommunication portable (21) comprenant un moyen pour communiquer dans un réseau téléphonique cellulaire et un moyen de communication sans fil à courte distance, **caractérisé en ce qu'**il comprend un moyen d'identification (37) pour
- en réponse à un message radio de faible puissance lui demandant de s'identifier, émettre un signal de réponse ;
- recevoir un message et/ou des instructions et agir sur eux,
ledit moyen d'identification (37) étant un moyen de communication sans fil à courte distance pour recevoir ledit message radio de faible puissance,
ledit dispositif de radiocommunication portable (21) étant adapté pour se mettre hors fonction lorsque des instructions lui demandant de le faire sont reçues.

6. Dispositif de radiocommunication portable selon la revendication 5 ou 6, adapté pour commuter vers un mode de communication à courte distance lorsque des instructions lui demandant de le faire sont reçues.

7. Dispositif de radiocommunication portable selon la revendication 5 ou 6, dans lequel ledit moyen d'identification (37) est un moyen de communication sans fil à courte distance conforme au standard Bluetooth, pour recevoir ledit message radio de faible puissance.

8. Procédé pour commander l'utilisation de terminaux mobiles prévus pour l'utilisation dans des réseaux de télécommunications mobiles, comprenant les étapes suivantes consistant à :
- émettre à partir d'une unité centrale (11) un signal de radio demandant à toutes les unités de radiocommunication dans un certain rayon de s'identifier,
émettre un signal de réponse à partir de chaque unité de radiocommunication portable (21) dans le rayon ;
- émettre des instructions à partir de l'unité centrale vers chaque unité de radiocommunication portable sous la dépendance du contenu du signal de réponse ;
l'unité de radiocommunication portable réagissant aux instructions ;
dans lequel le signal de radio, le signal de réponse et les instructions sont émis en utilisant un moyen de communication sans fil à courte distance, et dans lequel lesdites instructions comprennent l'ordre, adressé à l'unité de radiocommunication portable, de se mettre hors fonction, ou de désactiver la fonction de communication cellulaire.

9. Procédé selon la revendication 8, dans lequel lesdites instructions comprennent l'ordre d'adresser une notification à la personne portant l'appareil de radio portable.
